# EUROPÄISCHE PATENTSCHRIFT

(11) **EP 1 450 051 B1**
(45) Veröffentlichungstag und Bekanntmachung des Hinweises auf die Patenterteilung: **08.03.2006**
(21) Anmeldenummer: 04001049.8
(22) Anmeldetag: 20.01.2004
(51) Int. Cl.: F16B 12/20

(54) **Verbindungsbeschlag mit Verdrehsicherung**
Connection fitting with rotation locking mechanism
Ferrure d'assemblage avec dispositif empêchant la rotation

(30) Priorität: 19.02.2003 DE 20302693 U
(43) Veröffentlichungstag der Anmeldung: 25.08.2004
(73) Patentinhaber: Häfele GmbH & Co. KG, 72202 Nagold (DE)
(72) Erfinder: Walz, Rüdiger, 72401 Haigerloch (DE); Kuppler, Karl, 72202 Nagold (DE)
(74) Vertreter: Kohler Schmid Möbus

(56) Entgegenhaltungen:
- DE-A- 4 229 115
- NL-C- 7 782
- US-A- 5 810 505

## Beschreibung

Die Erfindung bezieht sich auf einen Beschlag zur lösbaren Verbindung zweier Platten, insbesondere Möbelplatten entsprechend dem Oberbegriff des Anspruchs 1. Die bekannten Beschläge dieser Art z.B. DE-A-4 229 115, weisen ein aus einer Freigabe- in eine Sperrstellung drehbares Gehäuse auf, welches den Kopf eines Anzugsbolzens aufnimmt. Der Schaft des Anzugsbolzens ist dabei mit dem Kopf über einen im Durchmesser abgesetzten Hals verbunden, wobei der Hals durch einen sich über einen Teil des Gehäuses erstreckenden Schlitz hindurchragt. Um zu erreichen, dass der Anzugsbolzen in seiner angezogenen Stellung unverrückbar im Gehäuse festgelegt ist, hat man bereits den Kopf und seine Auflage im Gehäuse mit Nocken als Verdrehsicherung versehen. Als Nachteil hierbei hat sich jedoch herausgestellt, dass sich beim Anziehen, vor allem wenn die Nocken des Kopfes des Anzugsbolzens auf die gegenüberliegenden Nocken der Auflage auflaufen, ruckartige Bewegungen ergeben. Außerdem läßt sich, wenn eine Nocke zwischen zwei gegenüberliegende zu liegen kommt, ein gewisses Spiel nicht vermeiden. Dies ist besonders groß, wenn Nocke auf Nocke liegt, weil dann ein Abrutschen in den nächsten Zwischenraum zu befürchten ist.

Um hier eine Verbesserung zu schaffen, ist unterhalb und/oder oberhalb des Schlitzes am Gehäuse eine sich entgegen der Spanndrehrichtung desselben nach außen verbreiternde Rippe vorgesehen, welche an der Stirnfläche des sich an den Hals anschließenden Schaftes des Anzugsbolzens anliegt. Dadurch ergibt sich ein völlig gleichmäßiger Anzug und eine Festpressung zwischen Kopf und Schaft, welche kein Spiel mehr zulässt.

Nach einem weiteren Merkmal der Erfindung ist die Rippe im Querschnitt schneidenartig ausgebildet, so dass sie sich in das Material des Schaftes einschneidet und auf diese Weise die Sicherung der Teile gegeneinander noch erheblich verstärkt.

Die Zeichnung zeigt ein Ausführungsbeispiel der Erfindung. Es stellen dar:

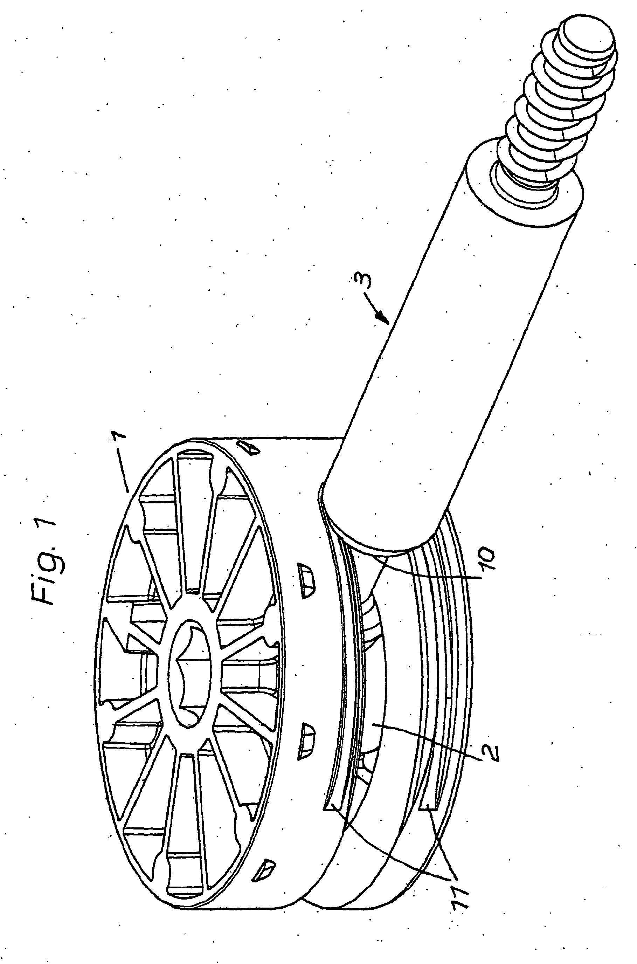

- Figur 1: die Ansicht eines Beschlages mit Anzugsbolzen in der angezogenen Stellung desselben,

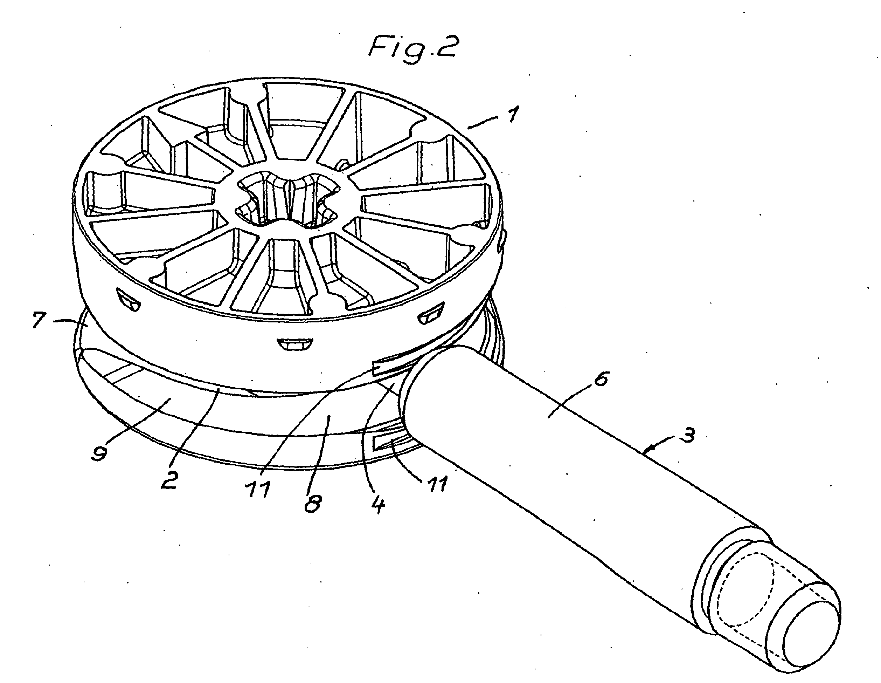

- Figur 2: eine Darstellung nach Fig. 1 mit einem anders gestalteten Anzugsbolzen in der Anfangsstellung,
- Figur 3: einen Querschnitt nach Fig. 1.

In den Schlitz 2 eines Gehäuses 1 ragt ein Anzugsbolzen 3 mit seinem Hals 4 und seinem Kopf 5 hinein. Der Hals 4 ist gegenüber dem sich anschließenden Schaft 6 des Anzugsbolzens 3 im Durchmesser abgesetzt.

Der Schlitz 2 des Gehäuses 1 erstreckt sich über den größten Teil des Umfangs des Gehäuses 1 und ist bei 7 erweitert, um ein Einsetzen des Kopfes 5 des Anzugsbolzens 3 zu ermöglichen. Der anschließende Teil 8 des Schlitzes 2 wird durch zwei übereinanderliegende Spannkurven 9 gebildet, an welchen das hintere Teil des Kopfes 5 anliegt, wobei der Hals 4 auf der Oberfläche der unteren Spannfläche 9 aufliegt.

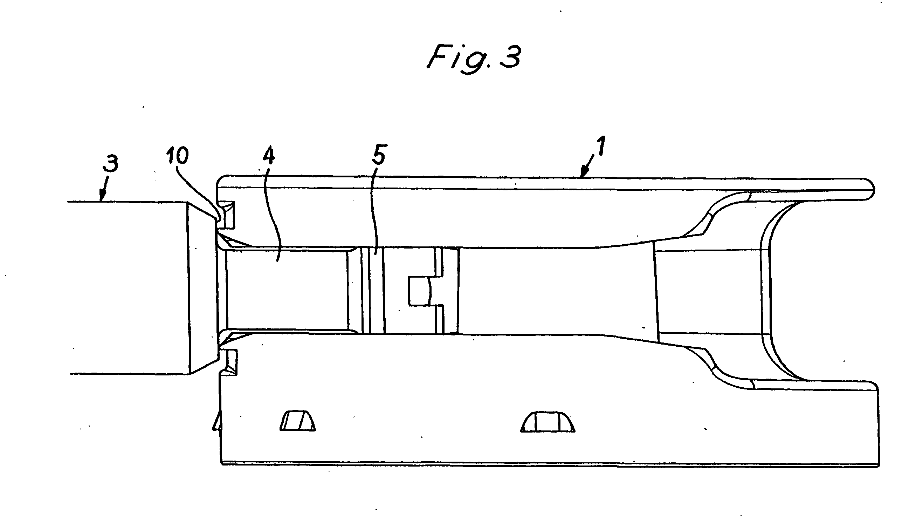

Um eine Verdrehsicherung zu schaffen, welche verhindert, dass sich das Gehäuse 1 aus der jeweiligen Drehstellung mit angezogenem Bolzen 3 ungewollt löst, ist oberhalb und unterhalb des Schlitzes 8 je eine Rippe 11 vorgesehen, welche sich entgegen der Spanndrehrichtung - welche im vorliegenden Fall im Uhrzeigersinn verläuft - verbreitert, so dass sich zwischen dem Kopf 5 und der Stirnfläche 10 des Schaftes eine erhöhte Spannung ergibt, welche ein unfreiwilliges zurückdrehen des Gehäuses 1 verhindert. Um die Wirkung der Rippen 11 noch zu verstärken, sind diese, wie vor allem Fig. 3 deutlich erkennen lässt, im Querschnitt schneidenartig ausgebildet, so dass sie sich in die Stirnfläche 10 des Schaftes 6 eingraben und damit die Sicherungskraft noch erhöhen.

## Patentansprüche

1. Beschlag zur lösbaren Verbindung zweier Platten, insbesondere Möbelplatten, mit einem aus einer Freigabe- in eine Sperrstellung drehbaren Gehäuse (1), welches den Kopf (5) eines Anzugsbolzen (3) aufnimmt, dessen Schaft (6) über einen im Durchmesser abgesetzten Hals (4) mit dem Kopf (5) verbunden ist, wobei der Hals (4) durch einen sich über einen Teil des Gehäuses erstreckenden Schlitz (2) hindurchragt, **dadurch gekennzeichnet, dass** unterhalb und/oder oberhalb des Schlitzes (2) am Gehäuse (1) eine sich entgegen der Spanndrehrichtung nach aussen verbreiternde Rippe (11) vorgesehen ist, welche an der Stirnfläche (10) des sich an den Hals (4) anschließenden Schaftes (6) des Anzugsbolzens (3) anliegt.

2. Beschlag nach Anspruch 1, **dadurch gekennzeichnet, dass** die Rippe (11) im Querschnitt schneidenartig ausgebildet ist.

## Claims

1. Fitting for releasably connecting two panels, in particular furniture panels, having a housing (1) which can be rotated out of a release position into a locking position and which receives the head (5) of an attachment pin (3), whose shaft (6) is connected to the head (5) by means of a neck (4) which is offset in terms of diameter, the neck (4) protruding through a slot (2) which extends over a portion of the housing, **characterised in that** there is provided, below and/or above the slot (2) on the housing (1), a rib (11) which widens outwardly counter to the direction of locking rotation and which abuts the end face (10) of the shaft (6) of the attachment pin (3), which shaft (6) adjoins the neck (4).

2. Fitting according to claim 1, **characterised in that** the rib (11) is constructed in the manner of a blade in cross-section.

## Revendications

1. Ferrure pour assembler de façon amovible deux panneaux, notamment des panneaux de meuble, comprenant un boîtier (1) pouvant passer en tournant d'une position de libération à une position de blocage, qui reçoit la tête (5) d'un goujon de serrage (3) dont la tige (6) est reliée à la tête (5) par le biais d'un col (4) de diamètre inférieur, le col (4) passant à travers une fente (2) s'étendant sur une partie du boîtier, **caractérisée en ce qu'**au-dessous et/ou au-dessus de la fente (2), sur le boîtier (1), est prévue une nervure (11) s'élargissant vers l'extérieur dans le sens opposé au sens de rotation de serrage, laquelle est appliquée contre la surface frontale (10) de la tige (6) du goujon de serrage (3) qui fait suite au col (4).

2. Ferrure selon la revendication 1, **caractérisée en ce que** la nervure (11) est réalisée avec une section transversale semblable à un tranchant.
